Europäisches Patentamt

European Patent Office

Office européen des brevets

(11) Publication number: **0 317 147 B1**

# EUROPEAN PATENT SPECIFICATION

(45) Date of publication of patent specification: **27.01.93**   (51) Int. Cl.5: **C04B 35/10**, C04B 35/58

(21) Application number: **88310454.9**

(22) Date of filing: **07.11.88**

(54) Si3N4-Al2O3 composite sintered bodies and method of producing the same.

(30) Priority: **09.11.87 JP 281061/87**

(43) Date of publication of application:
**24.05.89 Bulletin 89/21**

(45) Publication of the grant of the patent:
**27.01.93 Bulletin 93/04**

(84) Designated Contracting States:
**DE FR GB**

(56) References cited:
**EP-A- 0 100 380**
**EP-A- 0 141 366**

**CHEMICAL ABSTRACTS, vol. 107, no. 20, 16th November 1987, page 385, abstract no. 182063f, Columbus, Ohio, US; & JP-A-62 187 174 (JAPAN AUTO PARTS INDUSTRIES ASSOC.) 15-08-1987**

(73) Proprietor: **NGK INSULATORS, LTD.**
**2-56, Suda-cho, Mizuho-ku**
**Nagoya City Aichi Pref.(JP)**

Proprietor: **Niihara, Koichi**
**1-2-2, Hashirimizu-Shukusha Boei University**
**25, Hashirimizu 2-chome**
**Yokosuka City Kanagawa Prefecture(JP)**

Proprietor: **Hirai, Toshio**
**4-91, Takamori 3-chome**
**Izumi-shi Miyagi-ken(JP)**

(72) Inventor: **Niihara, Koichi 1-2-2 Hashirimizu-Shukusha**
**Boei University 25 Hashirimizu 2-chome**
**Yokosuka City Kanagawa Pref.(JP)**
Inventor: **Nakahira, Atsushi 407 Dokushin-Ryo**
**Boei University 10-20 Hahirimizu 1-chome**
**Yokosuka City Kanagawa Pref.(JP)**
Inventor: **Hirai, Toshio**
**4-91 Takamori 3-chome**
**Izumi City Miyagi Pref.(JP)**

(74) Representative: **Paget, Hugh Charles Edward et al**
**MEWBURN ELLIS & CO. 2/3 Cursitor Street**
**London EC4A 1BO(GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to $Si_3N_4$-$Al_2O_3$ composite sintered bodies and a method of producing the same, and more particularly to $Si_3N_4$-$Al_2O_3$ composite sintered bodies suitable for use as structural materials having a high strength at high temperature and a method of producing the same.

$Al_2O_3$ is widely used as a substrate or a package for integrated circuits, a chip for cutting tool or a refractory material. However, the strength of $Al_2O_3$ at a temperature of not lower than 1,000°C is low as compared with a silicon nitride sintered body and a silicon carbide sintered body, so that there is a restriction in its use as a structural material for engine parts and the like.

In order to increase the strength and toughness of $Al_2O_3$, it is proposed to disperse SiC whiskers into $Al_2O_3$. For example, the increase of the toughness in the $Al_2O_3$ sintered body through the dispersion of SiC whiskers is disclosed in American Ceramics Society Bulletin, 64[2], 298-304 (1985). However, when this sintered body is heated in air, the oxidation of SiC occurs violently, lowering strength, and the sintered body cannot be used at a high temperature for a long time.

Further, JP-A-55-126,574, JP-A-59-78,972 and JP-A-62-187,174 disclose that when $Si_3N_4$ is added to $Al_2O_3$, the strength, toughness and hardness are increased in the resulting $Al_2O_3$ sintered body with $Si_3N_4$ particles dispersed therein or in the resulting sintered body in which $Al_2O_3$ particles are dispersed into a sialon matrix. For these sintered bodies, however, the high temperature properties are not mentioned at all, or the satisfactory increase of the strength and toughness cannot be achieved, or the high-temperature strength cannot be expected due to the presence of sintering aid such as spinel or the like.

EP-A-141 366 describes a ceramic composition consisting of $\alpha$-$Al_2O_3$, $Si_3N_4$ and sialon, obtained by sintering at 1775°C a powder mixture consisting of $Al_2O_3$ and $Si_3N_4$. The powder mixture may contain 20% $Si_3N_4$.

It is an object of the invention to solve the aforementioned drawbacks of the conventional technique and to provide $Si_3N_4$-$Al_2O_3$ composite sintered bodies, which have a high strength from room temperature to higher temperature and an excellent oxidation resistance and are suitable for use as structural materials such as engine parts and the like, and a method of producing the same.

According to a first aspect of the invention, there is provided an $Si_3N_4$-$Al_2O_3$ composite sintered body as set out in claim 1.

According to a second aspect of the invention, there is provided a method of producing an $Si_3N_4$-$Al_2O_3$ composite sintered body, as set out in claim 2.

The $Si_3N_4$-$Al_2O_3$ composite sintered body according to the invention and the production method thereof will be described in detail below.

As a starting mixed powder, $Si_3N_4$ powder and $Al_2O_3$ powder preferably have a high purity and are fine. Further, the content of metallic elements other than Si and Al should be not more than 0.5% by weight in the mixed powder because the metallic element impurity remains in a vitreous state in the sintered body to degrade the high-temperature properties. Moreover, the $Si_3N_4$ powder preferably has an oxygen content of not more than 2% by weight and a particle size of not more than 5 μm. As the starting $Al_2O_3$ powder, $\gamma$-$Al_2O_3$ or the like may be used if it is converted into $\alpha$-$Al_2O_3$ after the firing. The starting $Si_3N_4$ powder may be $\alpha$-type or $\beta$-type. Thus, there is provided a mixed powder for subsequent shaping comprising 25-45 mol% of the above $Si_3N_4$ powder and the balance being $Al_2O_3$ powder, in which a content of metallic element other than Si and Al is not more than 0.5% by weight. In this case, the sintering aid should not be added because it remains in a vitreous state in the sintered body to degrade the high-temperature properties like metal impurity. The mixing is carried out under a wet or dry state by means of a ball mill or the like. The resulting mixed powder is shaped into a desired form by dry pressing, injection molding or the like.

The shaped body made from the mixed powder of $Si_3N_4$ powder and $Al_2O_3$ powder is densified by pressureless sintering, hot pressing, or hot isostatic pressing (HIP), during which a part or a whole of $Si_3N_4$ reacts with $Al_2O_3$ to form sialon. On the other hand, a part of $Al_2O_3$ reacts with $Si_3N_4$ as mentioned above, but the remaining portion of $Al_2O_3$ remains as $\alpha$-$Al_2O_3$. Thus, $Si_3N_4$-$Al_2O_3$ composite sintered body consisting of $\alpha$-$Al_2O_3$ and at least one crystal phase of $Si_3N_4$ and sialon according to the invention is obtained by these reactions. The sintering temperature is preferably 1,500-1,900°C for these reactions and for densification. When the sintering temperature is lower than 1,500°C, the sintered body is not sufficiently densified, while when it exceeds 1,900°C, the grain growth of $Si_3N_4$ and $Al_2O_3$ and the evaporation reaction become violent to cause the reduction of strength and bulk density and the degradation of high-temperature properties.

In the mixed powder, the content of $Si_3N_4$ powder should be within a range of 25-45 mol%. When this content exceeds 45 mol%, the whole of the sintered body is changed into sialon, losing the composite

EP 0 317 147 B1

effect.

As the firing atmosphere, an inert gas atmosphere such as nitrogen, argon or the like is preferable for preventing the oxidation of $Si_3N_4$. In the hot isostatic pressing, there may be performed a method wherein a presintered body having less open pore is previously produced by pressureless sintering or hot pressing and then subjected to hot isostatic pressing, or a method wherein the shaped body is airtightly sealed with a metal, glass or the like and then subjected to hot isostatic pressing.

The invention will be described with reference to the following examples.

Example

$\alpha$-$Si_3N_4$ powder having a content of metallic element impurity other than Si and Al of 0.2% by weight and a purity of 98% and $\alpha$-$Al_2O_3$ powder having an average particle size of 0.5 $\mu$m and a purity of not less than 99.8% were mixed at a mixing ratio as shown in the following Table 1 and further mixed in a polyethylene container containing iron balls each coated with polyethylene under a wet state of acetone for 10 hours. The thus obtained mixed powder was previously shaped into a size of 50 mm in diameter and 10 mm in thickness and pressed under a pressure of 200 MPa. Then, the shaped body was hot pressed at a temperature shown in Table 1 under a pressure of 30 MPa to obtain $Si_3N_4$-$Al_2O_3$ composite sintered bodies of Examples 1-3 according to the invention and Comparative Examples 1-4. Further, the same procedure as mentioned above was repeated, except that $Y_2O_3$ or MgO having a purity of not less than 99% was further added to the mixed powder, to obtain the composite sintered bodies of Comparative Examples 5 and 6. All of these sintered bodies were dense sintered bodies having a porosity of not more than 1%.

In Table 1 are shown results on the crystal phase observed by an X-ray diffraction method in Examples 1-3 and Comparative Examples 1-6. Further, in Examples 1-3 and Comparative Examples 1-6, the three-point flexural strengths at room temperature and 1,300°C were measured according to a method of JIS R1601 to obtain results as shown in Table 1. Moreover, the increase of weight per unit surface area in Examples 1-3 and Comparative Examples 1-6 was measured after the heating at 1,300°C for 100 hours to obtain results as shown in Table 1.

3

Table 1

| | Si₃N₄ | α-Al₂O₃ | Sintering aid (wt%) | Sintering temperature (°C) | Crystal phase | Three-point flexural strength (MPa) room temperature | Three-point flexural strength (MPa) 1300°C | Increase of weight through oxidation (mg/cm²) |
|---|---|---|---|---|---|---|---|---|
| Comparative Example 1 | 10 | 90 | | 1500 | α-Al₂O₃, Si₃N₄ | 510 | 500 | <0.1 |
| Comparative Example 2 | 20 | 80 | | 1800 | α-Al₂O₃, sialon | 530 | 530 | <0.1 |
| Example 1 | 25 | 75 | | 1700 | α-Al₂O₃, sialon | 610 | 580 | <0.1 |
| Example 2 | 40 | 60 | | 1900 | α-Al₂O₃, Si₃N₄, sialon | 620 | 610 | <0.1 |
| Example 3 | 45 | 55 | | 1500 | α-Al₂O₃, Si₃N₄, sialon | 600 | 550 | <0.1 |
| Comparative Example 3 | 5 | 95 | | 1700 | α-Al₂O₃, Si₃N₄ | 430 | 200 | <0.1 |
| Comparative Example 4 | 50 | 50 | | 1500 | sialon | 450 | 430 | 0.3 |
| Comparative Example 5 | 30 | 70 | MgO 2 | 1750 | α-Al₂O₃, sialon | 550 | 230 | >1.0 |
| Comparative Example 6 | 30 | 70 | Y₂O₃ 3 | 1650 | α-Al₂O₃, sialon | 540 | 280 | 0.5 |

As is seen from the above results, in the $Si_3N_4$-$Al_2O_3$ composite sintered bodies according to the invention, the three-point flexural strength at 1,300°C is not less than 550 MPa, so that there is no lowering of the strength from the strength value at room temperature, and also the increase of weight through oxidation at 1,300°C for 100 hours is not more than 0.1 mg/cm². That is, the sintered bodies according to the invention have high strength at high temperature and excellent oxidation resistance as compared with the comparative examples.

4

As mentioned above, the $Si_3N_4$-$Al_2O_3$ composite sintered body according to the invention consists of $\alpha$-$Al_2O_3$ and at least one crystal phase of $Si_3N_4$ and sialon and can have a strength of not less than 550 MPa over a temperature range of room temperature to 1,300°C and an excellent oxidation resistance, so that it is applicable to high-temperature structural materials such as engine parts and the like.

**Claims**

1. An $Si_3N_4$-$Al_2O_3$ composite sintered body, consisting of $\alpha$-$Al_2O_3$ and at least one of the crystal phases $Si_3N_4$ and sialon obtained by sintering at 1500-1900°C a mixed powder comprising 25-45 mol% of $Si_3N_4$ and the balance $Al_2O_3$ powder, in which the content of metallic elements other than Si and Al is not more than 0.5% by weight.

2. A method of producing an $Si_3N_4$-$Al_2O_3$ composite sintered body, which comprises shaping a mixed powder comprising 25-45 mol% of $Si_3N_4$ and the balance $Al_2O_3$ powder, in which the content of metallic elements other than Si and Al is not more than 0.5% by weight, and then sintering the shaped powder at 1500-1900°C.

**Patentansprüche**

1. Gesinterter Verbundwerkstoff aus $Si_3N_4$-$Al_2O_3$, bestehend aus $\alpha$-$Al_2O_3$ und mindestens einer der kristallinen Phasen $Si_3N_4$ und Sialon, erhalten durch Sintern eines Pulvergemischs umfassend 25-45 Mol-% $Si_3N_4$ und Rest $Al_2O_3$-Pulver bei 1.500-1.900°C, in dem der Gehalt von anderen Metall-Elementen als Si und Al nicht mehr als 0,5 Gew.-% beträgt.

2. Verfahren zur Herstellung eines gesinterten Verbundwerkstoffs aus $Si_3N_4$-$Al_2O_3$, umfassend das Formen eines Pulvergemischs, umfassend 25-45 Mol-% $Si_3N_4$ und Rest $Al_2O_3$-Pulver, in dem der Gehalt an anderen Metall-Elementen als Si und Al nicht mehr als 0.5 Gew.-% beträgt, und dann Sintern des Pulver-Formlings bei 1.500-1.900°C.

**Revendications**

1. Corps composite fritté en $Si_3N_4$-$Al_2O_3$ consistant en $\alpha$-$Al_2O_3$ et au moins l'une des phases cristallines de $Si_3N_4$ et sialon que l'on obtient par frittage à 1500-1900°C d'une poudre mixte contenant 25-45% en moles de $Si_3N_4$, le reste étant la poudre de $Al_2O_3$, où la teneur en éléments métalliques autres que Si et Al ne représente pas plus de 0,5% en poids.

2. Méthode de production d'un corps composite fritté en $Si_3N_4$-$Al_2O_3$ qui comprend la mise en forme d'une poudre mixte comprenant 25-40% en moles de $Si_3N_4$, le reste étant de la poudre de $Al_2O_3$, où la teneur en éléments métalliques autres que Si et Al ne dépasse pas 0,5% en poids puis le frittage de la poudre en forme à 1500-1900°C.